(19) Europäisches Patentamt
European Patent Office
Office européen des brevets

(11) Publication number: **0 133 993 B1**

(12) **EUROPEAN PATENT SPECIFICATION**

(45) Date of publication of patent specification: **19.06.91**

(51) Int. Cl.5: **C08L 67/02**, C08L 69/00, C08L 51/04, C08L 33/06

(21) Application number: **84109143.2**

(22) Date of filing: **01.08.84**

(54) **Modified polyester composition.**

(30) Priority: **19.08.83 US 524825**

(43) Date of publication of application:
**13.03.85 Bulletin 85/11**

(45) Publication of the grant of the patent:
**19.06.91 Bulletin 91/25**

(84) Designated Contracting States:
**DE FR GB IT NL**

(56) References cited:
**EP-A- 0 025 920**
**EP-A- 0 079 477**
**EP-A- 0 107 048**
**FR-A- 1 368 369**
**US-A- 4 260 693**
**EP-A- 0 037 686**
**EP-A- 0 105 244**
**EP-A- 0 110 222**
**US-A- 4 257 937**

(73) Proprietor: **GENERAL ELECTRIC COMPANY**
**1 River Road**
**Schenectady New York 12305(US)**

(72) Inventor: **Thompson, Robert Glenn**
**300 Washington Avenue**
**Mt. Vernon Indiana 47620(US)**
Inventor: **Liu, Nan-I**
**1604 Country Club Road**
**Mt. Vernon Indiana 47620(US)**
Inventor: **Agarwal, Surendra Hukamchand**
**1301 N. Elsas Avenue**
**Evansville Indiana 47711(US)**

(74) Representative: **Sieb, Rolf, Dr.**
**General Electric - Deutschland Patentab-teilung Praunheimer Landstrasse 50**
**W-6000 Frankfurt/Main(DE)**

**EP 0 133 993 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

The present invention relates to new and improved thermoplastic polyester compositions characterized by safer handling, improved processability, improved appearance and by retained resistance to impact failure. More particularly, it relates to poly(alkylene terephthalate) polymers and copolymers impact modified with the combination of an aromatic polycarbonate resin and a modifier combination comprising an acrylate/methacrylate core-shell graft copolymer resin and olefin copolymer resin.

High molecular weight linear polyesters and copolyesters of glycols and terephthalic or isophthalic acid have been available for a number of years. These are described, inter alia, in, U.S.-A-2,465,319 and 3,047,539. These patents disclose that the polyesters are particularly advantageous as film and fiber formers.

With the development of molecular weight control, the use of nucleating agents and two-step molding cycles, poly(ethylene terephthalate) has become an important constituent of injection moldable compositions. Poly(1,4-butylene terephthalate), because of its very rapid crystallization from the melt, is uniquely useful as a component in molding resins. Work-pieces molded from such polyester resins, alone or combined with reinforcement, in comparison with other thermoplastics, offer a high degree of surface hardness and abrasion resistance, high gloss, and lower surface friction.

Stable polyblends of poly(1,4-butylene terephthalate) and poly(ethylene terephthalate) can be molded into useful unreinforced and reinforced articles. See U.S.-A-3,953,394,.

Block copolyesters derived from terminally-reactive pre-formed blocks of poly(1,4-butylene terephthalate) and from terminally-reactive pre-formed blocks of an aromatic/aliphatic or aliphatic polyester, the blocks being connected end to end by ester linkages are useful per se as molding resins and also in intimate combination with poly(1,4-butylene terephthalate) and/or poly(ethylene terephthalate) resins.

It has been proposed to increase the impact strength of polyesters by adding various modifiers. For example, U.S.-A-4,044,073 discloses that a useful impact modifier for such polyesters is an aromatic polycarbonate. U.S.-A-3,591,659 discloses that a useful family of modifiers comprises polyalkylacrylates, methacrylates and/or ethacrylates. U.S.-A-4,022,748 discloses that a rubber-elastic graft copolymer having a glass transition temperature below -20 ° C. is a useful modifier.

U.S.-A-3,864,428 discloses that compositions comprising a major proportion of an aromatic polyester, a minor proportion of an aromatic polycarbonate, and from 1 to 30% by weight of a simple grafted methyl methacrylate-butadiene-styrene copolymer possess improved impact strength and chemical resistance over the polycarbonate resin alone.

More recently, it has been discovered that the addition of certain grafted core-shell copolymer resins to polyester resin compositions provides articles molded therefrom with superior impact resistance over a broad range of temperatures. One type of core-shell graft copolymer modifier having a butadiene-based core and methacrylate shell is described in in U.S.-A-4,180,494. These core-shell copolymers comprise a rubbery first stage polymerized from a monomer system comprising 50 percent by weight of butadiene, alone or in combination with a vinyl monomer, e.g. styrene, and a rigid thermoplastic final stage polymerized from methyl methacrylate and a crosslinking monomer. When a modifier combination comprising an aromatic polycarbonate resin and this butadiene-based core-shell copolymer resin is added to a polyester composition comprising a poly(1,4-butylene terephthalate) resin, shaped articles molded therefrom possess good impact strength. While methyl methacrylate-butadiene-styrene copolymers not of the core-shell type, also provide good impact strength at room temperatures of about 23 ° C, only the compositions made with the core-shell copolymers retain more than 70% of their impact strength at -40 ° C, making them uniquely suitable for molding such articles as automobile bumpers, ski bindings and the like, where low-temperature impact resistance is important.

Other useful core-shell copolymer resins are those having a rubbery acrylate core and a hard methacrylate shell such as are described in U.S.-A-4,096,202. As disclosed therein, the acrylate-based core shell copolymer resins are comprised of a rubbery first phase polymerized from a monomer system comprising a $C_1$-$C_6$ alkyl acrylate and minor amounts of a crosslinking monomer and a graft-linking monomer, respectively, and a rigid thermoplastic final phase polymerized from a monomer system comprising at least 50% by weight of a $C_1$-$C_6$ alkyl methacrylate. These core-shell copolymer resins provide enhanced impact strength to saturated polyester compositions.

In U.S.-A-4,260,693 it is disclosed that aromatic polycarbonates may be impact modified with an acrylate-based core-shell copolymer resin and an olefin-acrylate copolymer resin.

In U.S.-A-4,257,937 and in U.S.-A-4,264,487, impact modified thermoplastic compositions are disclosed which comprise a poly(alkylene terephthalate) resin, an aromatic polycarbonate resin and an acrylate-based core-shell copolymer resin.

In EP-A-114 288 (postpublished) impact modified thermoplastic compositions are disclosed comprising a polyester resin, an aromatic polycarbonate resin or mixtures thereof may contain a precompounded modifier composition comprising a butadiene-based core-shell copolymer resin and an antioxidant/stabilizer package comprising a hindered phenolic antioxidant, an aromatic amine, a thioester and a trivalent phosphorus compound. The precompounded modifier may optionally contain a polyolefin resin added to facilitate the preblending of the core-shell copolymer with the combination of stabilizers. The precompounded impact modifier and stabilizer package are more easily dispersable in the other polymeric components and effectively reduce the hazards associated with the handling and processing of rubber dusts. In addition, precompounding of the temperature sensitive butadiene-based core-shell resin with stabilizers decreases the degradation of the impact modifier which improves the impact resistance of the overall composition after processing.

EP-A- 0 110 222 (postpublished) discloses a molding composition comprising 10 to 90 percent by weight of a high-molecular weight thermoplastic polyester, 0,1 to 20 percent by weight of a linear low density polyethylene, 5 to 70 percent by weight of an aromatic polycarbonat and 2 to 25 percent by weight of a resinous impact modifier.

Although many of the above-mentioned patents provide polyester or polycarbonate compositions possessing good impact strength at room temperature and some at lower temperatures, other polyester compositions exhibiting improved impact strength at both lower and room temperatures which also possess improved storage stability, improved melt flow, improved tensile elongation and better part appearance are still needed and desired.

Unexpectedly, in view of the foregoing, it has been discovered that a thermoplastic composition comprising a linear or branched saturated polyester homopolymer or copolymer resin and an aromatic polycarbonate resin may be provided with retained impact strength, with reduced melt viscosity and improved melt flow, improved tensile elongation, improved storage stability and better part appearance by incorporating therein, in certain proportions, a modifier combination comprising a multiphase composite interpolymer having a rubbery acrylate core and a hard thermoplastic shell together with an olefin copolymer.

Although it is known that butadiene or acrylic rubbers can improve the impact strength of polyester resins, most of these additives are, in general, finely divided particles prepared by emulsion polymerization which are diffult to handle. These polymer dusts are extremely flammable and the potential for dust explosions during the handling of these materials is a significant risk. Moreover, the dispersion of the powders into the polymer matrix during normal processing is generally poor.

Therefore, in accordance with a preferred embodiment of the present invention, a multiphase composite interpolymer having an acrylate core and a thermoplastic methacrylate shell is first precompounded with an olefin copolymer under relatively mild conditions of low temperature and low shear to form a concentrate. When the resulting concentrate is thereafter intimately admixed with the polyester resin composition at the relatively high processing temperatures normally required to melt the polyester, the precompounded concentrate is easily melt blended into the the polyester resulting in reduced melt viscosity and improved melt flow and a more complete and uniform dispersion of the impact modifiers throughout the polymer matrix is obtained. This results in improved tensile elongation and improved part appearance. The acrylate based multiphase composite interpolymer is relatively less temperature sensitive and therefore does not suffer the same temperature degradation observed with earlier butadiene-based materials which require the further addition of expensive antioxidants and stabilizers. Moreover, the precompounded concentrate is easier to handle and eliminates or substantially reduces the danger of chemical dust explosions and worker exposure to chemical dust.

Moreover, the addition of the olefinic copolymer permits a reduction in the levels of the multiphase core-shell interpolymer resin without sacrificing other beneficial properties which provides a substantial reduction in the cost for the compositions of this invention.

In accordance with the subject invention new and improved thermoplastic molding compositions are provided in the form of resin mixtures comprising:

(a) a polyester comprising:

(i) a poly(alkylene terephthalate) resin;

(ii) a blend of a poly(1,4-butylene terephthalate) resin and a poly (ethylene terephthalate) resin;

(iii) a block copolyester of poly(1,4-butylene terephthalate) and an aromatic/aliphatic or aliphatic polyester;

(iv) a blend of (iii) and a poly (ethylene terephthalate) resin; or

(v) a blend of (iii) a poly(1,4-butylene terephthalate) resin;

(b) an aromatic polycarbonate resin; and

(c) a modifier combination comprising:

(i) a multiphase composite core-shell interpolymer comprising a first elastomeric core stage of a $C_1$-$C_6$ alkyl acrylate together with a cross-linking monomer and a graft-linking monomer and a rigid thermoplastic final stage comprising at least 50% by weight of $C_1$-$C_6$ alkyl methacrylate; and

(ii) a copolymer of an olefin and at least one monomeric compound selected from a $C_1$-$C_6$ alkyl acrylate, a $C_1$-$C_6$ alkyl methacrylate, acrylic acid, methacrylic acid or a mixture of any of the foregoing,

wherein the molding composition will comprise from 40 to 90 parts by weight polyester component (a); from 10 to 60 parts by weight aromatic polycarbonate component (b); and from 1 to 40 parts by weight of modifier combination (c), based upon the total weight of components (a), (b) and (c) combined.

More particularly, modifier combination (c) will preferably comprise from 5 to 30 parts by weight of multiphase composite interpolymer component (c) (i) and from 1 part to 15 parts by weight of olefinic copolymer component (c) (ii), based upon the total weight of the overall composition.

The thermoplastic compositions of the present invention may also include reinforcing agents, such as glass fibers, mineral fillers, such as clays, mica and/or talc, as well as, flame retardant agents.

In a preferred embodiment, the modifier combination is added as a precompounded composition, or concentrate, of the acrylate-based multiphase composite interpolymer and the olefin copolymer resin. This precompounding permits the use of smaller amounts of core-shell interpolymer resin, and provides better processability and moldability, better part appearance and improved handling safety, to be more fully described hereinafter.

The polyesters suitable for use as component (a) herein are prepared by known techniques, such as the transesterification of esters of terephthalic acid alone or mixtures of esters of terephthalic acid and isophthalic acid, with the glycol or mixture of glycols and subsequent polymerization, by heating the glycols with the free acids or with halide derivatives thereof, and similar processes. These methods are described in U.S.-A-2,465,319 and 3,047,539 and elsewhere. In addition blends as defined in Claim 1 may be employed. A suitable poly(1,4-butylene terephthalate) resin is commercially available from General Electric Company under the trade designation, VALOX® 315, and poly(ethylene terephthalate) resins are also extremely well known and are abundantly available commercially.

The block copolyester resins for use as component (a) (iii) above, can be prepared by the transesterification of (a) straight or branched chain poly (1,4-butylene terephthalate) and (b) a copolyester of a linear aliphatic dicarboxylic acid and, optionally, an aromatic dibasic acid with one or more straight or branched chain dihydric aliphatic glycols. For example, a poly(1,4-butylene terephthalate) can be mixed with a polyester of adipic acid and ethylene glycol, and heated at 235 °C. to melt the ingredients, then heated further under a vacuum until the formation of the copolyester is complete. As the second component, there can be substituted poly(neopentyl adipate), poly (1,6-hexylene azelate-co-isophthalate), poly(1,6-hexylene adipate-co-isophthalate) and the like.

Illustratively, the high molecular weight polyesters will have an intrinsic viscosity of at least about 0.2 deciliters/gram and, preferably, at least about 0.4 deciliters/gram as measured in a 60/40 phenol/tetrachloroethane mixture at 30 °C., for poly (ethylene terephthalate) and at least 0.6 and more, preferably 0.8 deciliters/gram, same basis, for poly (1,4-butylene terephthalate). Most preferably, for the former, the intrinsic viscosity will be in the range of 0.5 to 1.0 dl./g. and from 0.9 to 1.2 for the latter.

Especially useful when high melt strength is important are branched high melt viscosity poly(1,4-butylene terephthalate) resins, which include a small amount, e.g., up to 5 mole percent based on the terephthalate units, of a branching component containing at least three ester forming groups. The branching component can be one which provides branching in the acid unit portion of the polyester, or in the glycol unit portion, or it can be a hydrid. Illustrative of such branching components are tri- or tetracarboxylic acids, such as trimesic acid, pyromellitic acid, and lower alkyl esters thereof, and the like, or preferably, polyols, and especially preferably, tetrols, such as pentaerythritol, triols, such as trimethylolpropane; or dihydroxy carboxylic acids and hydroxydicarboxylic acids and derivatives, such as tartaric acids, and the like.

The branched poly(1,4-butylene terephthalate) resins and their preparation are described in U.S.-A-3,953,404.

The aromatic polycarbonate resins for use herein as component (b) may be prepared by reacting a dihydric phenol with a carbonate precursor, such as phosgene, a haloformate or a carbonate ester. Generally speaking, such carbonate polymers may be typified as possessing recurring structural units of the formula:

I 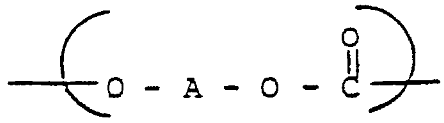

wherein A is a divalent aromatic radical of the dihydric phenol employed in the polymer producing reaction. Preferably, the carbonate polymers used to provide the resinous mixtures of the invention have an intrinsic viscosity (as measured in methylene chloride at 25°C.) ranging from about 0.30 to about 1.00 dl./g. The dihydric phenol which may be employed to provide such aromatic carbonate polymers are mononuclear or polynuclear aromatic compounds, containing as functional groups two hydroxy radicals, each of which is attached directly to a carbon atom of an aromatic nucleus.

Typical dihydric phenols are:
2,2-bis-[4-hydroxyphenyl)propane;
hydroquinone;
resorcinol;
2,2-bis-(4-hydroxyphenyl)pentane;
2,4'-(dihydroxydiphenyl)methane;
bis-(2-hydroxyphenyl)methane;
bis-(4-hydroxyphenyl)methane;
bis-(4-hydroxy-5-nitrophenyl)methane;
1,1-bis(4-hydroxyphenyl)ethane;
3,3-bis(4-hydroxyphenyl)pentane;
2,2-dihydroxydiphenyl;
2,6-dihydroxynaphthalene;
bis-(4-hydroxydiphenyl)sulfone;
bis-(3,5-diethyl-4-hydroxyphenyl)sulfone;
2,2-bis-(3,5-dimethyl-4-hydroxyphenyl)propane;
2,4'-dihydroxydiphenyl sulfone;
5'-chloro-2,4'-dihydroxydiphenyl sulfone;
bis-(4-hydroxyphenyl)diphenyl sulfone;
4,4'-dihydroxydiphenyl ether;
4,4'-dihydroxy-3,3'-dichlorodiphenyl ether;
4,4'-dihydroxy-2,5-dihydroxydiphenyl ether; and the like.

Other dihydric phenols which are also suitable for use in the preparation of the above polycarbonates are disclosed in U.S.-A-2,999,835; 3,038,365; 3,334,154; and 4,131,575.

These aromatic polycarbonates can be manufactured by known processes, such as, for example and as mentioned above, by reacting a dihydric phenol with a carbonate precursor, such as phosgene, in accordance with methods set forth in the above-cited literature and in U.S.-A- 4,123,436, or by transesterification processes such as are disclosed in U.S.-A-3,153,008, as well as other processes known to those skilled in the art.

It is possible to employ two or more different dihydric phenols or a copolymer of a dihydric phenol wish a glycol or with a hydroxy- or acid-terminated polyester or with a dibasic acid in the event a carbonate copolymer or interpolymer rather than a homopolymer is desired for use in the preparation of the polycarbonate mixtures of the invention. Branched polycarbonates are also useful, such as are described in U.S. 4,001,184. Also there can be utilized blends or linear polycarbonate and a branched polycarbonate. Moreover, blends of any of the above materials may be employed in the practice of this invention to provide the aromatic polycarbonate. In any event, the preferred aromatic carbonate polymer for use as component (b) herein is a homopolymer derived from 2,2-bis(4-hydroxyphenyl) propane (bisphenol-A), commercially available under the trade designation LEXAN® from General Electric Company.

In the modifier combination (c), the multiphase composite core-shell interpolymer component (c) (i) is a core-shell interpolymer comprising preferably about 25 to 95 percent by weight of a first elastomeric core phase and about 75 to 5 percent by weight of a final rigid thermoplastic shell phase. One or more intermediate phases are optional, for example, a middle stage polymerized from about 75 to 100 percent by weight styrene.

The first stage or core of multiphase composite interpolymer component (c) (i) is preferably polymerized from 75 to 99.8 weight percent $C_1$ to $C_6$ alkyl acrylate resulting in an acrylic rubber core having a $T_g$ below about 10°C. and crosslinked with 0.1 to 5 weight percent crosslinking monomer and further containing 0.1 to 5 percent by weight graftlinking monomer. The preferred alkyl acrylate is butyl acrylate.

The crosslinking monomer is preferably a polyethylenically unsaturated monomer having a plurality of addition polymerizable reactive groups all of which polymerize at substantially the same rate of reaction. Suitable crosslinking monomers include poly acrylic and poly methacrylic esters of polyols such as butylene diacrylate and dimethacrylate, trimethylol propane trimethacrylate, and the like, di-and trivinyl benzene, vinyl acrylate and methacrylate, and the like. The preferred crosslinking monomer is butylene diacrylate.

The graftlinking monomer is preferably a polyethylenically unsaturated monomer having a plurality of addition polymerizable reactive groups, at least one of which polymerizes at a substantially different rate of polymerization from at least one other of said reactive groups. The function of the graftlinking monomer is to provide a residual level of unsaturation in the elastomeric phase, particularly in the latter stages of polymerization, and consequently, at or near the surface of the elastomer particles. When the rigid thermoplastic shell phase is subsequently polymerized at the surface of the elastomer, the residual unsaturated, addition-polymerizable reactive group contributed by the graftlinking monomer participates in the subsequent reaction so that at least a portion of the rigid shell phase is chemically attached to the surface of the elastomer.

Among the effective graftlinking monomers are allyl group-containing monomers of allyl esters of ethylenically unsaturated acids, such as allyl acrylate, allyl methacrylate, diallyl maleate, diallyl fumarate, diallyl itaconate, allyl acid maleate, allyl acid fumarate, and allyl acid itaconate. Somewhat less preferred are the diallyl esters of polycarboxylic acids which do not contain polymerizable unsaturation. The preferred graftlinking monomers are allyl methacrylate and diallyl maleate. A most preferred interpolymer has only two stages, the first stage comprising about 60 to 95 percent by weight of the interpolymer and being polymerized from a monomer system comprising 95 to 99.9 percent by weight butyl acrylate, 0.1 to 2.5 percent by weight butylene diacrylate as crosslinking agent, 0.1 to 2.5 percent by weight allyl methacrylate or diallyl maleate as graftlinking agent with a final stage polymerized from about 60 to 100 percent by weight methacrylate. A preferred two stage interpolymer of this type is commercially available under the tradename, ACRYLOID KM 330, from Rohm & Haas Chemical Company.

The final or shell stage monomer system can be comprised of $C_1$ to $C_6$ alkyl methacrylate, styrene, acrylonitrile, alkyl acrylates, allyl methacrylate, diallyl methacrylate, and the like, as long as the overall $T_g$ system is at least 20°C. The final stage monomeric system is at least 50 weight percent $C_1$ to $C_6$, preferably $C_1$ to $C_4$, alkyl methacrylate. It is further preferred that the final stage polymer be free of units which tend to degrade poly(alkylene terephthalates), for example acid, hydroxyl, amino, and amide groups.

The multiphase composite interpolymers are prepared sequentially by emulsion polymerization techniques wherein each successive outer stage coats the previous stage polymer. By way of illustration, the monomeric $C_1$-$C_6$ alkyl acrylate, the cross-linking monomer and the graft-linking monomer are copolymerized in water in the presence of a free-radical generating catalyst and a polymerization regulator which serves as a chain transfer agent, at a temperature on the order of from 15°C. to 80°C. The first elastomeric phase is formed in situ to provide a latex of the core copolymer.

Thereafter, the second rigid thermoplastic phase monomers are added and are emulsion polymerized with the core-copolymer latex to form the interpolymers. A more detailed description of the preparation of the interpolymers for use herein as component (c) (i) is found in U.S.-A-4,034,013 and 4,096,202.

Component (c) (ii) comprises an olefin resin selected from the following olefinic copolymers: a copolymer of an olefin and at least one monomeric compound selected from the group consisting of a $C_1$-$C_6$ alkyl acrylate, a $C_1$-$C_6$ alkyl methacrylate, acrylic acid, methacrylic acid and a mixture of any of the foregoing.

Copolymer component (c) (ii) is made from an olefin, e.g., ethylene, propylene, or the like, copolymerized with one or more of a comonomer comprising a $C_1$-$C_6$ alkyl acrylate, e.g., methyl acrylate, ethyl acrylate, hexyl acrylate and the like; a $C_1$-$C_6$ alkyl methacrylate, e.g., methyl methacrylate, ethyl methacrylate, hexyl methacrylate, and the like; acrylic acid; or methacrylic acid. Especially preferred are the well known copolymers of ethylene with an alkyl ester of acrylic acid. These are disclosed in U.S.-A-2,953,551. Generally, the acrylate or methacrylate portion of the copolymer can range from about 10 to about 30 weight percent. The olefin portion of the copolymer can range from about 70 to about 90 weight percent. The preferred copolymer for use as component (c) (ii) is an ethylene-ethyl acrylate copolymer in which the weight ratio of the ethylene fraction to the ethyl acrylate fraction is about 4.5 to 1. Suitable olefin-acrylate copolymers, as defined above, can be prepared by methods well known to those skilled in the art or can be obtained commercially. For example, Union Carbide's BAKELITE® DPD-6169 ethylene-ethyl acrylate copolymer is suitable for use in the present invention.

In accordance with a preferred embodiment of the subject invention, modifier combination (c) is precompounded to form a concentrate which is thereafter admixed with the polyester and polycarbonate

and other additives.

The precompounded composition is prepared by melt blending the core-shell interpolymer and the olefin-copolymer in equipment such as a compounding extruder, rubber mill, Banbury mixer and the like, followed by dicing or pelletizing of the preblended components.

In certain preferred features of the compositions will include fillers, especially reinforcing fillers such as fibrous (filamentous) glass or mineral fillers, such as clay, mica, talc, and the like, preferably clay. The fillers can be untreated or treated with silane or titanate coupling agents, etc. The filamentous glass to be employed as reinforcement in such embodiments of the present compositions is well known to those skilled in the art and is widely available from a number of manufacturers. For compositions ultimately to be employed for electrical uses, it is preferred to use fibrous glass filaments comprised of lime-aluminum borosilicate glass that is relatively soda free. This is known as "E" glass. However, other glasses are useful where electrical properties are not so important, e.g., the low soda glass known as "C" glass. The filaments are made by standard processes, e.g., by steam or air blowing, flame blowing and mechanical pulling. The preferred filaments for plastic reinforcement are made by mechanical pulling. The filament diameters range from about 3 to 19 mm (0.00012 to 0.00075 inch), but this is not critical to the present invention.

The length of the glass filaments and whether or not they are bundled into fibers and the fibers bundled in turn to yarns, ropes or rovings, or woven into mats, and the like, are also not critical to the invention. However, in preparing the molding compositions, it is convenient to use the filamentous glass in the form of chopped strands or from 0.3 to 5 cm (about one-eighth to about 2 inches) long. In articles molded from the compositions, on the other hand, even shorter lengths will be encountered because, during compounding, considerable fragmentation will occur. This is desirable, however, because the best properties are exhibited by thermoplastic injection molded articles in which the filament lenghts lie between about 12.5 mm to 6 mm (0.0005 to 0.250 inch).

The amount of the filler can vary widely depending on the formulation and needs of the particular composition, it being essential only that an amount is selected which is at least sufficient to provide reinforcement. Preferably, however, the reinforcing filler will comprise from about 1 to about 60% by weight of filler (d) and components (a), (b) and (c) combined.

The modified polyester compositions of the present invention, alone, or in combination with a filler or fillers can be rendered flame retardant with an effective amount of a conventional flame retardant agent (e). As is well known, flame retardants can be based on elementary red phosphorus, phosphorus compounds, halogen and nitrogen compounds alone, or preferably in further combination with synergists, such as antimony compounds. Especially useful are polymeric and oligomeric flame retardant agents comprising tetrabromobisphenol-A carbonate units, see, for example, U.S.-A-3,833,685.

Other ingredients such as dyes, pigments, drip retardants and the like can be added in conventional amounts for their conventionally employed purposes.

As explained previously, the modifier combination, or preferably the modifier concentrate, is admixed with the other ingredients of the final composition. This can be done in one convenient manner by tumbling the concentrate and other components to form a dry blend extruding the blend at a temperature between 232 to 288 °C (450 to 550 °F), cooling the extrudate, forming it into pellets and injection molding at a temperature of 232 to 288 °C (450 to 550 °F). (10 to 120 °C (50 to 250 °F). mold temperature).

The new and improved modified polyester compositions of the present invention exhibit decreased melt viscosity and improved melt flow rendering them well suited for use in injection molding applications. In the preferred embodiment wherein the modifier combination is present as a precompounded composition, the acrylate/methacrylate core-shell copolymer powders are wetted and pre-pelletized with the polyolefin copolymer resin which effectively reduces or removes the hazards associated with blending or bulk blending these rubber particles with other resinous polymeric components. The modifer concentrate provides a pre-dispersed impact modifier, which when blended with the polyester and polycarbonate resins, is more easily and effectively dispersed throughout, which provides better part appearance and tensile elongation while the impact strength is retained.

In order that those skilled in the art may better understand how the present invention may be practiced, the following examples are given by way of illustration and not by way of limitation.

In the following examples, all parts and percentages are by weight unless otherwise noted. The various polyester compositions were first dry blended, then compounded and extruded in a Prodex extruder at 260 °C (500 °F.) and finally molded in a Van Dorm injection molding machine at 250 °C (480 °F.) to form test specimens. The test specimens were molded to form ASTM test bars of 6.3 x 1.25 x 0.3 (2½" x 1/2"x 1/8") dimensions. Resistance to impact failure of the specimens was determined in accordance with the Notched Izod Impact Test, ASTM D256 on both notched and unnotched specimens.

A precompounded concentrate was prepared by tumbling 100 parts of an acrylate/methacrylate core-shell copolymer, ACRYLOID KM 330, Rohm & Haas Chemical Company with 50 parts of an ethylene-ethyl acrylate copolymer wherein the weight ratio of the ethylene fraction to the ethyl acrylate fraction is about 4.5 to 1, BAKELITE® DPD 6169, Union Carbide Company. The dry blend ass transferred to a Prodex extruder and compounded and extruded at 232° C (450° F). to form pellets.

The resulting precompounded modifier composition was then blended, and extruded with the polyester resin, polycarbonate resin, fillers and flame retardants, and thereafter injection molded in accordance with the procedure described above.

EXAMPLES 1 and 2

The following compositions were prepared by dry blending the ingredients, followed by compounding and extrusion to form pellets. The pellets were injection molded to form standard test specimens. The compositions prepared and the results obtained are set forth in Table 1 as follows:

TABLE 1: MODIFIED POLYESTER COMPOSITIONS

| EXAMPLES<br>COMPOSITIONS (pbw) | A* | B** | C*** | 1 | 2 |
|---|---|---|---|---|---|
| Poly(1,4-butylene terephthalate)[a] | 68.3 | 68.3 | - | 68.3 | 69.8 |
| Poly(bisphenol-A carbonate)[b] | 15.0 | 15.0 | 95.7 | 15.0 | 15.0 |
| Acrylate/methacrylate core-shell copolymer[c] | 15.0 | - | 3.2 | 10.0 | - |
| Ethylene-ethylacrylate copolymer d. | - | - | 1.0 | 5.0 | - |
| Modifier concentrate e. | - | - | - | - | 15.0 |
| MMBS graft copolymer f. | - | 15 | - | - | - |
| Stabilizers/mold release | 1.7 | 1.7 | .1 | 1.7 | .2 |
| PROPERTIES | | | | | |
| 1/8" notched Izod impact strength, Nm/cm (ft-lbs/in). | 10,8 (20) | 9,94 (18,4) | 7,83 (14,5) | 10,26 (19) | 10,31 (19,1) |
| 1/8" unnotched Izod impact strength, Nm/cm (ft-lbs/in). | NB | NB | NB | NB | NB |
| Melt viscosity, Pa.s (poises) at 266°C. | 1,022 (10,223) | 850 (8,500) | - | 805 (8,052) | 760 (7,600) |
| Tensile elongation, % | 102 | 173 | 110 | 168 | 173 |

a. VALOX® 315, General Electric Company.
b. LEXAN® 135, General Electric Company
c. ACRYLOID® KM330, Rohm & Haas Chemical Company
d. BAKELITE® DPD 6169, Union Carbide Company.
e. 2:1 w/w ACRYLOID® KM330, BAKELITE® DPD 6169
f. B-22, Kanegafuchi Chemical Company.

* within the scope of U.S.-A-4,257,937.
** within the scope of U.S.-A-3,864,428.
*** within the scope of U.S.-A-4,260,693.

These data illustrate the improvements in the melt viscosity and tensile elongation and retained impact strength obtained with the new and improved modified polyester compositions of the subject invention. For example, the compositions of Examples A and 1 exhibit substantially similar impact strength properties,

however, Example 1 also exhibits significantly lower melt viscosity and higher tensile elongation. The prior art composition of Example B containing a simple grafted MMBS copolymer exhibits good impact strength, melt viscosity and tensile elongation, however, after thermal aging of these Example B compositions, both the impact strength and tensile elongation decline due to the inherent poor thermal stability of the MMBS graft copolymer, as compared with aged compositions of Examples 1 and 2 containing the acrylate/methacrylate core-shell copolymer and olefin copolymer resins of the subject invention which exhibit good thermal stability. The prior art compositions of Example C based on polycarbonate alone exhibit poorer impact strength and tensile elongation, and in addition, due to the art-recognized poor solvent resistance of aromatic polycarbonate resins, exhibit poorer solvent resistance to unleaded gasoline and other solvents as compared with the polyester-containing compositions of this invention shown in Examples 1 and 2.

Moreover, the use of the precompounded modifier composition of the present invention, shown by Example 2, provided a composition that exhibited improved melt flow, thereby providing a thermoplastic composition having improved processability, moldability and extrudability. The compositions of Example 2 also exhibited improved tensile elongation. These properties were obtained using less of the acrylate/methacrylate core-shell copolymer resin. In addition, parts molded from the composition of Example 2 showed no striations or color spots indicating more uniform dispersion and better appearance than those compositions containing unprecompounded modifiers.

As already mentioned,copolyesters and block copolyesters may be substituted in whole or in part for the poly(1,4-butylene terephthalate) resin component (a). Instead of a bisphenol-A polycarbonate, one containing units derived from tetramethylbisphenol-A or from dixylenol sulfone can be used as component (b). Instead of a multiphase composite (e.g. core-shell) interpolymer having an n-butyl acrylate core, one having an ethyl acrylate core could be used. Instead of an ethylene-ethyl acrylate copolymer, propylene may be substituted in the copolymer for the olefin component; or there can be used copolymers of ethylene and methyl methacrylate, ethylene and acrylic acid and ethylene and methacrylic acid, to name but a few of the variations possible.

## Claims

**1.** A resin mixture comprising:

(a) a polyester resin composition comprising:

(i) a poly(alkylene terephthalate) resin;

(ii) a blend of poly(1,4-butylene terephthalate) resin area a poly(ethylene terephthalate) resin;

(iii) a block copolyester of poly(1,4-butylene terephthalate) and an aromatic/aliphatic or aliphatic polyester;

(iv) a blend of (iii) and a poly(ethylene terephthalate) or

(v) a blend of (iii) and a poly(1,4-butylene terephthalate) resin;

(b) an aromatic polycarbonate resin; and

(c) a modifier combination comprising

(i) a multiphase composite interpolymer resin comprising a first elastomeric core stage of a $C_1$-$C_6$ alkyl acrylate, a crosslinking monomer and a graft-linking monomer, and a rigid thermoplastic final stage comprising at least 50% by weight of $C_1$-$c_6$ alkyl methacrylate; and

(ii) copolymers of an olefin and at least one monomeric compound selected from a $C_1$-$C_6$ alkyl acrylate, a $C_1$-$C_6$ alkyl methacrylate, acrylic acid, and methacrylic acid, and mixtures of the foregoing olefinic resins,

wherein component (a) comprises from 40 to 85 parts by weight; component (b) comprises from 10 to 60 parts by weight and component (c) comprises from 1 to 40 parts by weight, based upon the total weight of components (a), (b) and (c) combined.

**2.** A resin mixture as defined in Claim 1, wherein in said component (c), the multiphase composite interpolymer (c)(i) comprises from 5 to 30 parts by weight and olefinic copolymer (c)(ii) comprises from 1 to 15 parts by weight, based upon the weight of the overall composition.

**3.** A resin mixture as defined in Claim 1 wherein said polyester component (a) is a poly(1,4-butylene terephthalate) resin.

**4.** A resin mixture as defined in Claim 1, wherein the aromatic polycarbonate resin (b) comprises recurring structural units of formula:

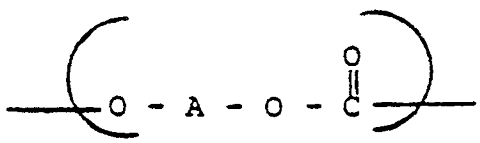

wherein A is a divalent aromatic radical of a dihydric phenol.

5. A resin mixture as defined in Claim 4, wherein in said formula, A is derived from a 4,4'-dihydroxy-di (mononuclear aryl) alkane.

6. A resin mixture as defined in Claim 1, wherein said aromatic polycarbonate resin (b) comprises poly-(2,2-dihydroxydiphenylpropane) carbonate.

7. A resin mixture as defined in Claim 1, wherein said multiphase composite interpolymer component (c)(i) comprises a first elastomeric core phase of n-butyl acrylate with a butylene diacrylate crosslinking agent and an allyl methacrylate graft-linking agent and a hard final phase of methyl methacrylate.

8. A resin mixture as defined in Claim 1, wherein said copolymer component (c)(ii) comprises a copolymer of ethylene and ethyl acrylate.

9. A resin mixture as defined in Claim 1, wherein the modifier combination (c) is added as a precompounded composition.

10. A resin mixture as defined in Claim 9, wherein said precompounded composition is present in an amount of from 1 to 40 parts by weight, based upon the weight of the overall composition.

11. A resin mixture as defined in Claim 9, wherein the weight ratio of multiphase composite interpolymer to the olefinic resin is about 2 to 1.

## Revendications

1. Mélange de résines comprenant :
   (a) une composition de résine de polyester comprenant :
      (i) une résine de poly(téréphtalate d'alkylène) ;
      (ii) un mélange de résine de poly(téréphtalate de butylène-1,4) et d'une résine de poly-(téréphtalate d'éthylène);
      (iii) un copolyester séquencé de poly(téréphtalate de butylène-1,4) et d'un polyester aromatique/aliphatique ou aliphatique ;
      (iv) un mélange de (iii) et d'un poly(téréphtalate d'éthylène) ou
      (v) un mélange de (iii) et d'une résine de poly(téréphtalate de butylène-1,4) ;
   (b) une résine de polycarbonate aromatique et
   (c) une combinaison d'agents de modification comprenant :
      (i) une résine interpolymère composite multiphase comprenant un premier état noyau élastomérique d'un acrylate d'alkyle en $C_1$-$C_6$, un monomère agent de réticulation et un monomère agent de greffage et un état final thermoplastique rigide comprenant au moins 50% en poids d'un méthacrylate d'alkyle en $C_1$-$C_6$ et
      (ii) des copolymères d'une oléfine et d'au moins un composé monomérique choisi parmi un acrylate d'alkyle en $C_1$-$C_6$, un méthacrylate d'alkyle en $C_1$-$C_6$, l'acide acrylique et l'acide méthacrylique et des mélanges des résines oléfiniques précédentes,
   dans lequel le composant (a) représente de 40 à 85 parties en poids ; le composant (b) représente de 10 à 60 parties en poids et le composant (c) représente de 1 à 40 parties en poids, exprimé par rapport au poids total des composants (a), (b) et (c) combinés.

2. Mélange de résines selon la revendication 1, dans lequel dans le composant (c), l'interpolymère composite multiphase (c) (i) représente de 5 à 30 parties en poids et le copolymère oléfinique (c) (ii) représente de 1 à 15 parties en poids, exprimé par rapport au poids de la composition totale.

3. Mélange de résines selon la revendication 1, dans lequel le composant polyester (a) est une résine de poly(téréphtalate de butylène-1,4).

4. Mélange de résines selon la revendication 1, dans lequel la résine de polycarbonate aromatique (b) comprend des mailles récurrentes répondant à la formule :

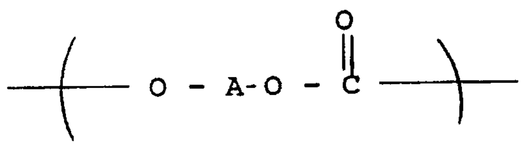

dans laquelle A représente un radical aromatique divalent d'un diphénol.

5. Mélange de résines selon la revendication 4, dans lequel dans la formule, A est dérivé d'un dihydroxy-4,4' di(aryl mononucléaire) alcane.

6. Mélange de résines selon la revendication 1, dans lequel la résine de polycarbonate aromatique (b) se compose de poly(carbonate de dihydroxydiphényl-2,2 propane).

7. Mélange de résines selon la revendication 1, dans lequel le composant interpolymère composite multiphase (c) (i) comprend une première phase noyau élastomérique d'acrylate de n-butyle avec un agent de réticulation diacrylate de butylène et un agent de greffage méthacrylate d'allyle et une phase finale dure de méthacrylate de méthyle.

8. Mélange de résines selon la revendication 1, dans lequel le composant copolymère (c) (ii) se compose d'un copolymère d'éthylène et d'acrylate d'éthyle.

9. Mélange de résines selon la revendication 1, dans lequel on ajoute la combinaison d'agents de modification (o) sous forme d'une composition préhomogénéisée.

10. Mélange de résines selon la revendication 9, dans lequel la composition préhomogénéisée est présente en une quantité de 1 à 40 parties en poids, exprimé par rapport au poids de la composition totale.

11. Mélange de résines selon la revendication 9, dans lequel le rapport pondéral de l'interpolymère composite multiphase à la résine oléfinique est d'environ 2 pour 1.

**Ansprüche**

1. Harzmischung umfassend:
   (a) eine Polyesterharz-Zusammensetzung umfassend:
      (i) ein Poly(alkylenterephthalat)harz,
      (ii) eine Mischung von Poly(1,4-butylenterephthalat)harz und einem Poly(ethylenterephthalat)harz,
      (iii) einen Block-Copolyester von Poly(1,4-butylenterephthalat) und einem aromatisch/aliphatischen oder aliphatischen Polyester,
      (iv) eine Mischung von (iii) und einem Poly(ethylenterephthalat) oder
      (v) eine Mischung von (iii) und einem Poly(1,4-butylenterephthalat)harz,
   (b) ein aromatisches Polycarbonatharz und
   (c) eine Reglerkombination umfassend
      (i) ein mehrphasiges interpolymeres Verbundharz umfassend eine erste elastomere Kernstufe aus einem $C_1$-$C_6$ Alkylacrylat, einem vernetzenden Monomer und einem pfropfvernetzenden Monomer und eine starre thermoplastische Endstufe umfassend mindestens 50 Gew.-% von $C_1$-$C_6$-Alkylmethacrylat und
      (ii) Copolymere eines Olefins und mindestens einer monomeren Verbindung, ausgewählt aus einem $C_1$-$C_6$-Alkylacrylat, einem $C_1$-$C_6$-Alkylmethacrylat, Acrylsäure, Methacrylsäure und Mischungen der vorgenannten olefinischen Harze,
   worin die Komponente (a) von 40-85 Gewichtsteile umfaßt, die Komponente (b) von 10-60 Gewichtsteile umfaßt und die Komponente (c) von 1-40 Gewichtsteile umfaßt, auf der Basis des Gesamtgewichtes der kombinierten Komponenten (a), (b) und (c).

2. Harzmischung nach Anspruch 1, in der Komponente (c) das mehrphasige interpolymere Verbundharz (c) (i) von 5-30 Gewichtsteile umfaßt und das olefinische Copolymer (c) (ii) von 1-15 Gewichtsteile umfaßt, auf der Basis des Gewichtes der Gesamtzusammensetzung.

3. Harzmischung nach Anspruch 1, worin die Polyesterkomponente (a) ein Poly(1,4-butylenterephthalat)-harz ist.

4. Harzmischung nach Anspruch 1, worin das aromatische Polycarbonatharz (b) wiederkehrende Struktureinheiten der Formel umfaßt:

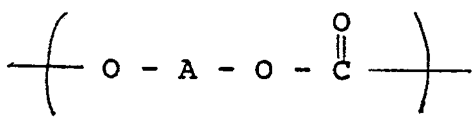

worin A ein zweiwertiger aromatischer Rest eines zweiwertigen Phenols ist.

5. Harzmischung nach Anspruch 4, worin in der genannten Formel A abgeleitet ist von einem 4,4'-dihydroxy-di (einkernigen Aryl)alkan.

6. Harzmischung nach Anspruch 1, worin das aromatische Polycarbonatharz (b) Poly(2,2-dihydroxydiphenylpropan)-carbonat umfaßt.

7. Harzmischung nach Anspruch 1, worin die mehrphasige interpolymere Verbundharzkomponente (c) (i) eine erste elastomere Kernphase von n-Butylacrylat mit einem Butylendiacrylat als Vernetzungsmittel und einem Allylmethacrylat als pfropfvernetzendem Mittel und eine harte Endfaser von Methylmethacrylat umfaßt.

8. Harzmischung nach Anspruch 1, worin die Copolymer-Komponente (c) (i) ein Copolymer von Ethylen und Ethylacrylat umfaßt.

9. Harzmischung nach Anspruch 1, worin die Reglerkombination (c) als vorvermischte Zusammensetzung hinzugegeben ist.

10. Harzmischung nach Anspruch 9, worin die vorvermischte Zusammensetzung in einer Menge von 1-40 Gewichtsteilen, auf der Basis des Gewichtes der Gesamtzusammensetzung, vorhanden ist.

11. Harzmischung nach Anspruch 9, worin das Gewichtsverhältnis des mehrphasigen interpolymeren Verbundharzes zum olefinischen Harz etwa 2 zu 1 beträgt.